# EUROPEAN PATENT SPECIFICATION

(11) **EP 0 412 687 B1**
(45) Date of publication and mention of the grant of the patent: **18.10.1995**
(21) Application number: 90308228.7
(22) Date of filing: 26.07.1990
(51) Int. Cl.: G01K 11/16

(54) **Liquid crystal temperature responsive display device**
Temperaturabhängige Anzeigeeinrichtung mit Flüssigkristallen
Dispositif de visualisation utilisant des cristaux liquides dépendant de la température

(30) Priority: 28.07.1989 GB 8917304
(43) Date of publication of application: 13.02.1991
(73) Proprietor: LIQUID CRYSTAL DEVICES LIMITED, Ruislip Middlesex HA4 0YW (GB)
(72) Inventor: Rickson, Colin David, Woburn Sands, Buckinghamshire (GB)
(74) Representative: Newby, Martin John

(56) References cited:
- EP-A- 0 018 424
- DE-A- 3 536 750
- US-A- 4 030 482

## Description

This invention relates to a liquid crystal visual display device, e.g. a thermometer such as a forehead thermometer, having at least one display area capable of displaying information at different temperatures.

When a liquid crystal composition undergoes a visible colour change in response to temperature activation, it typically changes colour, as its temperature increases through a relatively narrow temperature activation range, from red to green to blue. On increasing the temperature, however, past this narrow temperature activation range, the liquid crystal composition still remains visible as a shadowy blue or ultra violet colour over a relatively wide temperature range. In order to filter out this shadowy blue/ultra violet colouration and provide a more precise colour turn off, it is known to employ an optical filter, e.g. a yellow transparent filter, in front of the liquid crystal composition. Such optical filters are disclosed, for example, in EP-A-0018424.

In EP-A-0119072, we have disclosed a device for providing a visual indication of the level of a liquid contained in a container having walls with good heat conducting properties. The device comprises strips of liquid crystal materials which are placed against the container walls and which change colour over different temperature activation ranges. A detectable change of container wall temperature occurs at the level of the liquid in the container and this is detected by the device as an abrupt change of colour displayed by at least one of the strips of liquid crystal material at this level. Although primarily intended, and marketed, as a device having the strips of liquid crystal material arranged side by side, the specification does refer to the possibility of such strips overlying each other.

The present invention seeks to provide a liquid crystal visual display device for displaying information, which changes with temperature, over the same display area of the device.

According to the present invention a liquid crystal visual display device comprises a display area in which a number of layers of liquid crystal material, each being activatable to change colour over a different temperature activation range, overlie each other and optical filter means for reducing or blocking out part or parts of the colour response of said layers of liquid crystal material, at least the layer or layers of liquid crystal material in front of the backmost layer of liquid crystal material being sufficiently transparent to enable an underlying temperature activated layer of liquid crystal material to be visible therethrough.

The optical filter means preferably acts as a pass filter. For example the optical filter means may act as a low pass filter blocking out the shorter wavelengths of visible light, e.g. the blue colour response. Alternatively, the optical filter means may act as a band-pass filter only allowing light within a specific wavelength range to pass therethrough. In this latter case, the optical filter means may be tuned to allow only a specific colour, e.g. red, yellow, green or blue, to be viewed.

Conveniently, the optical filter means comprises a separate optical filter layer positioned in front of the topmost layer of liquid crystal material. Alternatively, however, in the case where the layers of liquid crystal material are applied as layers of "inks" of microencapsulated liquid crystal material held together in binder material, the optical filter means may be incorporated in the binder material for the topmost layer of liquid crystal "ink". In this latter case, the optical filter means thus forms part of the topmost layer of liquid crystal material.

Conveniently the visual display device has at least two display areas. In the case of a forehead thermometer, one display area may have three layers of liquid crystal material designed to display the figures "35", "37" and "39" and the other display area may have three layers designed to display the figures "36", "38" and "40". On increase of the temperature through the temperature range 35°C to 40+°C, the various numbers "35" through to "40" would be switched on and off alternately between the two display areas. Suitably the optical filter means are tuned to ensure a sharp cut off of the number displayed by each display so that as one number is switched "on" the preceding number is switched "off". In the case where the optical filter means acts as a band-pass type optical filter, different "band-passes" may be selected for the different display areas so that the numbers displayed at different display areas are of different colour, e.g. all the numbers displayed at one display area could be red and all the numbers displayed at another display area could be yellow/green.

Typically, at least in the case where the visual display device comprises a thermometer, each layer of liquid crystal material has a temperature activation range of approximately 4°C, the colour changing through red and green to start of blue over the initial, approximately 1°C, part of the temperature activation range and remaining a shadowy blue and ultra violet colour for the final, approximately 3°C, part of the temperature activation range. In this case, the filter means may be tuned to filter out the shadowy blue/ultra violet colour so that the colour displayed by each layer is only visible over the initial part of the temperature activation range. The various layers therefore remain visible for approximately a 1°C temperature range. Alternatively the filter means could be tuned to enable only a specific colour in the initial part of the temperature activation range to be visible.

The various layers of liquid crystal material and the filter means are preferably in the form of "inks" which can be applied by known techniques, e.g. screen printing. If a screen printing process is employed, the "screen" suitably has a very fine mesh to enable the layers to be applied in the desired thin layers which render them transparent.

Suitably the liquid crystal material of each layer is microencapsulated, the microcapsules having a diameter no greater than 20 µm and preferably less than 15 µm. Each overlying layer of liquid crystal material is preferably less than 50 µm thick when wet and less than 20 µm, e.g. 10 - 20 µm, when dry.

An embodiment of the invention will now be described, by way of example, with reference to the accompanying drawing, in which
Figure 1 is a view from above of a liquid crystal visual display device according to the invention in the form of a forehead thermometer, and
Figure 2 is a sectional view, not drawn to scale, taken on the line II - II of Figure 1.

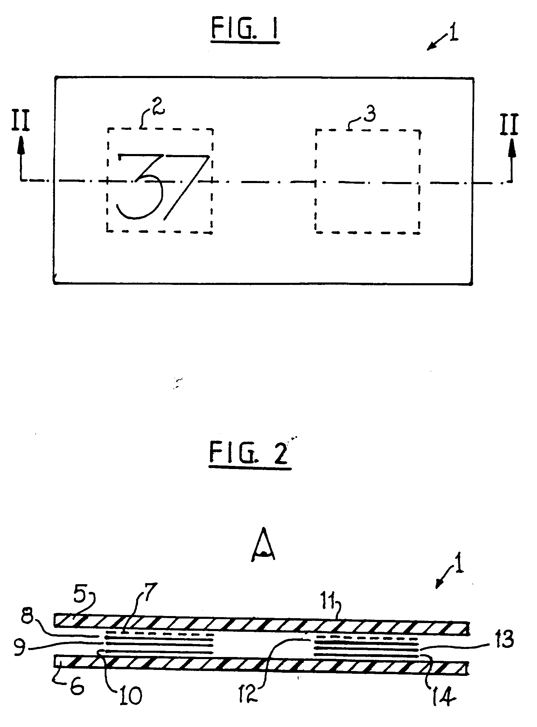

Figures 1 and 2 show a liquid crystal forehead thermometer, generally designated 1, having two display regions 2 and 3 for displaying digital representations of the sensed temperature. The thermometer 1 comprises a transparent, flexible front sheet 5 and an opaque, e.g. black coloured, flexible backing sheet 6. The sheets 5 and 6 may be of any suitable plastics material, e.g. PVC, may be gloss or matt finished, and may be surface modified to eliminate static and to enable specially developed ink systems to key directly onto the modified surface. The sheets 5 and 6 may be of the same or different thickness but typically have a thickness of from 200 to 500 µm. The backing sheet 6 may be rendered opaque by coating, e.g. printing, it with a layer of ink, e.g. black ink. The backing sheet 6 of plastics material may be dispensed with completely being replaced by a layer of ink, e.g. black ink, which may or may not be backed with a layer of heat conducting metallic material, e.g. aluminium foil.

Various layers are printed, e.g. silk screen printed, in overlying relationship, on to the inside of the front sheet and are shown schematically in Figure 2. In particular, the display area 2 is formed of an optical filtering layer 7 with underlying liquid crystal layers 8, 9 and 10 and the display area 3 is formed of an optical filtering layer 11 with underlying liquid crystal layers 12, 13 and 14. After printing these various layers on the sheet 5, the sheet 6 is bonded to the sheet 5 by means of any suitable high-tack adhesive which may be either applied as a dry laminate or silk screen printed. The filtering layers 7 and 11 are suitably formed of yellow ink and form transparent layers acting as low-pass filters for filtering out the blue/ultra violet colours of the liquid crystal layers underneath. The liquid crystal layers 8 - 10 and 12 - 14 are applied as numbers "35", "37", "39", "36", "38" and "40", respectively, and change colour over different temperature activation ranges. Alternatively, of course, the "numbers" may be formed as "windows" in a patch, e.g. a rectangle, of the layer of liquid crystal material. In this latter case, each number appears as a dark colour, e.g. black, visible through the "window" and the surrounding background changes colour on temperature activation. Typically the colour display temperature activation ranges for the layers 8 - 10 and 12 - 14 are 35 - 39°C, 37 - 41°C, 39 - 43°C, 36 - 40°C, 38 - 42°C and 40 - 44°C, respectively. The liquid crystals of each layer are chosen to display change of colour through red and green to start of blue over approximately the first 1°C of the temperature activation range, the overlying filter layer being tuned to filter out the blue/ultra violet colouration of the final 3°C of the temperature activation range. In this way, when the thermometer 1 is viewed from the front through the layer 5, a different liquid crystal layer will be visible dependent on the temperature sensed by the thermometer. As the temperature sensed increases from 35°C, the numerals "35", "36", "37", "38", "39" and "40" will successively become visible and then disappear in the two display regions 2 and 3.

In order that the underlying liquid crystal layers are rendered visible from the front of the thermometer 1, all the liquid crystal layers 8 - 10 and 12 - 14 of the two display regions 2 and 3 are transparent. This is achieved by making the liquid crystal layers very thin, e.g. preferably no greater than 50 µm when wet or typically 20 µm, e.g. 10 - 20 µm, when dry. If, as preferred, the layers are formed as "inks" of microencapsulated liquid crystal material, the microcapsules should have a diameter no greater than about 20 µm and preferably less than 15 µm. As previously mentioned, it is preferred to silk screen print the layers of liquid crystal material and, in order to achieve the thin layers required, a fine mesh screen must be employed.

The optical filtering layers 7 and 11 of the described thermometer 1 have been low-pass type filters, i.e. filters, typically coloured yellow, blocking the passage of blue/ultra violet light. Alternatively, however, the optical filtering layers may be designed as "band-pass" type filters only allowing a specific colour to pass through the filter. If required, the different optical filtering layers associated with different display areas may be tuned differently so that different display areas will display different colours on temperature activation of the underlying layers of liquid crystal material. Thus, for example, one display area may display only red "numbers" and the other display area may display only yellow/green "numbers".

In the thermometer described, the optical filtering layers 7 and 11 could be dispensed with if the transparent sheet 5 is coloured the desired filtering colour, e.g. yellow. Alternatively, the layers 7 and 11 could be coated on the front, instead of the back, of the flexible sheet 5. It may be possible to dispense with separate and distinct optical filtering layers and instead to incorporate the filtering layers 7 and 11 in the uppermost layers of liquid crystal material 8 and 12, respectively, or, alternatively, in each of the layers of liquid crystal material. For example, this can be achieved by appropriate colouration of the binder material for the microencapsulated liquid crystal material.

Although the invention has been specifically described with reference to a forehead thermometer, the invention has application in other types of thermometer or temperature responsive visual display device. For example, a display device according to the invention could display different pictures at different temperatures for use as a ornamental display or toy. Alternatively the device could be used on a can of drink to display, for example, whether the contained drink was too hot, too cold or at a drinkable temperature. The key to the invention, however, is the use of optical filtering means in conjunction with two or more layers of liquid crystal material which overlie each other.

## Claims

1. A liquid crystal visual display device (1) comprising a display area (2;3), a number of layers (8,9,10; 12,13,14) of liquid crystal material on the display area (2;3), each being activatable to change colour over a different temperature activation range, and optical filter means (7;11) for reducing or blocking out part or parts of the colour response of said layers (8-10; 12-14) of liquid crystal material, characterised in that said layers (8-10; 12-14) of liquid crystal material overlie each other, at least the layer or layers (8,9; 12,13) of liquid crystal material in front of the backmost layer (10;14) of liquid crystal material being sufficiently transparent to enable an underlying temperature activated layer of liquid crystal material to be visible therethrough.

2. A visual display device according to claim 1, characterised in that the optical filter means (7;11) acts as a pass filter.

3. A visual display device according to claim 1 or 2, characterised in that the optical filter means (7;11) acts as a low pass filter blocking out the shorter wavelengths of visible light.

4. A visual display device according to claim 1 or 2, characterised in that the optical filter means (7;11) acts as a band-pass filter only allowing light within a specific wavelength range to pass therethrough.

5. A visual display device according to any of the preceding claims, characterised in that the optical filter means (7;11) comprises a separate optical filter layer positioned in front of the topmost layer (8;12) of liquid crystal material.

6. A visual display device according to any of claims 1 to 5, characterised in that said layers (8-10; 12-14) of liquid crystal material are applied as layers of "inks" of microencapsulated liquid crystal material held together in binder material and in which the optical filter means (7;11) is incorporated in the binder material for the topmost layer (8;12) of liquid crystal "ink".

7. A visual display device according to any of the preceding claims, characterised in that at least two display areas (2;3 ) are provided.

8. A visual display device according to claim 7, characterised in that the optical filter means (7;11) are tuned to ensure a sharp cut off of the information displayed by each display area.

9. A visual display device according to any of the preceding claims, characterised in that each layer (8-10; 12-14) of liquid crystal material has a temperature activation range of approximately 4°C.

10. A visual display device according to claim 9, characterised in that for each temperature activation range, the colour changes through red and green to start of blue over the initial, approximately 1°C, part of the temperature activation range and remains a shadowy blue and ultra violet colour for the final, approximately 3°C, part of the temperature activation range.

11. A visual display device according to claim 10, characterised in that the filter means (7;11) is tuned to filter out the shadowy blue/ultra violet colour so that the colour displayed by each layer is only visible over the initial part of the temperature activation range.

12. A visual display device according to claim 10, characterised in that the filter means (7;11) is tuned to enable only a specific colour in the initial part of the temperature activation range to be visible.

## Patentansprüche

1. Flüssigkristallsichtanzeigegerät (1) mit einer Anzeigefläche (2; 3), einer Anzahl von Schichten (8, 9, 10; 12, 13, 14) aus Flüssigkristallmaterial auf der Anzeigefläche (2; 3), wobei jede dieser Schichten so aktiviert werden kann, daß sie ihre Farbe über einen unterschiedlichen Temperaturbereich verändert, und einem optischen Filtermittel (7; 11) zur Reduzierung oder zum Ausblenden eines Abschnitts oder mehrerer Abschnitte des Farbverhaltens besagter Flüssigkristallmaterialschichten (8-10; 12-14), dadurch gekennzeichnet, daß besagte Flüssigkristallmaterialschichten (8-10; 12-14) übereinander liegen, wobei mindestens die Flüssigkristallmaterialschicht oder die Flüssigkristallmaterialschichten (8, 9; 12, 13), die vor der hintersten Flüssigkristallmaterialschicht (10; 14) liegen, ausreichend transparent ist bzw. sind, damit eine darunterliegende temperaturaktivierte Flüssigkristallmaterialschicht durch sie hindurch sichtbar ist.

2. Sichtanzeigegerät nach Anspruch 1, dadurch gekennzeichnet, daß das optische Filtermittel (7; 11) als Durchlaßfilter wirkt.

3. Sichtanzeigegerät nach Anspruch 1 oder 2, dadurch gekennzeichnet, daß das optische Filtermittel (7; 11) als Sperrfilter wirkt, der die kürzeren Wellenlängen des sichtbaren Lichts ausblendet.

4. Sichtanzeigegerät nach Anspruch 1 oder 2, dadurch gekennzeichnet, daß das optische Filtermittel (7; 11) als Selektionsfilter wirkt, der nur Licht aus einem speziellen Wellenlängenbereich durchläßt.

5. Sichtanzeigegerät nach einem der vorangehenden Ansprüche, dadurch gekennzeichnet, daß das optische Filtermittel (7; 11) eine getrennte optische Filterschicht aufweist, die vor der obersten Flüssigkristallmaterialschicht (8; 12) positioniert ist.

6. Sichtanzeigegerät nach einem der Ansprüche 1 bis 5, dadurch gekennzeichnet, daß besagte Flüssigkristallmaterialschichten (8-10; 12-14) als "Farbschichten" aus mikroverkapseltem Flüssigkristallmaterial aufgebracht werden, die in einem Bindemittel zusammengehalten werden und in die das optische Filtermittel (7; 11) in dem Bindemittel für die oberste Schicht (8; 12) aus Flüssigkristall-"Farbe" eingearbeitet ist.

7. Sichtanzeigegerät nach einem der vorangehenden Ansprüche, dadurch gekennzeichnet, daß mindestens zwei Anzeigeflächen (2; 3) vorgesehen sind.

8. Sichtanzeigegerät nach Anspruch 7, dadurch gekennzeichnet, daß die optischen Filtermittel (7; 11) so abgestimmt sind, daß sie eine scharfe Abgrenzung für die von jeder Anzeigefläche angezeigte Information sicherstellen.

9. Sichtanzeigegerät nach einem der vorangehenden Ansprüche, dadurch gekennzeichnet, daß jede Flüssigkristallmaterialschicht (8-10; 12-14) einen Temperaturaktivierungsbereich von ungefähr 4°C aufweist.

10. Sichtanzeigegerät nach Anspruch 9, dadurch gekennzeichnet, daß die Farbe in jedem Temperaturaktivierungsbereich im ca. 1°C großen Anfangsabschnitt des Temperaturaktivierungsbereichs eine Veränderung durch Rot und Grün bis zum Anfang von Blau erfährt und im letzten ca. 3°C großen Abschnitt, eine schattige dunkelblaue/ultraviolette Farbe beibehält.

11. Sichtanzeigegerät nach Anspruch 10, dadurch gekennzeichnet, daß das Filtermittel (7; 11) so abgestimmt ist, daß es die schattige dunkelblaue/ultraviolette Farbe derart herausfiltert, daß die von jeder Schicht angezeigte Farbe nur im Anfangsabschnitt des Temperaturaktivierungsbereichs sichtbar ist.

12. Sichtanzeigegerät nach Anspruch 10, dadurch gekennzeichnet, daß das Filtermittel (7; 11) so abgestimmt ist, daß nur eine bestimmte Farbe im Anfangsabschnitt des Temperaturaktivierungsbereichs sichtbar ist.

## Revendications

1. Dispositif d'affichage visuel à cristaux liquides (1), comprenant une zone d'affichage (2; 3), un certain nombre de couches (8, 9, 10; 12, 13, 14) de matériau à cristaux liquides sur la zone d'affichage (2; 3), chacune pouvant être activée pour changer de couleur sur une gamme d'activation thermique à différentes températures, et un dispositif de filtre optique (7; 11) pour réduire ou arrêter une partie ou des parties de la réponse chromatique desdites couches (8-10; 12-14) du matériau à cristaux liquides, caractérisé en ce que lesdites couches (8-10; 12-14) de matériau à cristaux liquides se recouvrent, au moins la ou les couches (8, 9; 12, 13) de matériau à cristaux liquides placée devant la couche arrière (10; 14) de matériau à cristaux liquides étant suffisamment transparente pour permettre à une couche sous-jacente de matériau à cristaux liquides, activée thermiquement, d'être visible à travers.

2. Dispositif d'affichage visuel selon la revendication 1, caractérisé en ce que le dispositif de filtre optique (7; 11) joue le rôle de filtre passe.

3. Dispositif d'affichage visuel selon la revendication 1 ou 2, caractérisé en ce que le dispositif de filtre optique (7; 11) joue le rôle de filtre passe-bas arrêtant les longueurs d'onde plus courtes que la lumière visible.

4. Dispositif d'affichage visuel selon la revendication 1 ou 2, caractérisé en ce que le dispositif de filtre optique (7; 11) joue le rôle de filtre passe-bande se laissant seulement traverser par une lumière dans un domaine spécifique de longueurs d'onde.

5. Dispositif d'affichage visuel selon l'une quelconque des revendications précédentes, caractérisé en ce que le dispositif de filtre optique (7; 11) comprend une couche de filtre optique séparée, placée devant la couche supérieure (8; 12) de matériau à cristaux liquides.

6. Dispositif d'affichage visuel selon l'une quelconque des revendications 1 à 5, caractérisé en ce que lesdites couches (8-10; 12-14) de matériau à cristaux liquides sont appliquées en couches "d'encres" de matériau à cristaux liquides microencapsulé, maintenues solidaires les unes des autres dans une matière liante et dans lequel le dispositif de filtre optique (7; 11) est incorporé dans la matière liante pour la couche supérieure (8; 12) "d'encre" à cristaux liquides.

7. Dispositif d'affichage visuel selon l'une quelconque des revendications précédentes, caractérisé en ce qu'au moins deux zones d'affichage (2; 3) sont prévues.

8. Dispositif d'affichage visuel selon la revendication 7, caractérisé en ce que le dispositif de filtre optique (7; 11) est réglé de manière à garantir un blocage net de l'information affichée par chaque zone d'affichage.

9. Dispositif d'affichage visuel selon l'une quelconque des revendications précédentes, caractérisé en ce que chaque couche (8-10; 12-14) de matériau à cristaux liquides a une gamme d'activation thermique d'environ 4°C.

10. Dispositif d'affichage visuel selon la revendication 9, caractérisé en ce que, pour chaque gamme d'activation thermique, la couleur passe par le rouge et le vert pour commencer au bleu, sur la partie initiale, environ 1°C, de la gamme d'activation thermique, et reste de couleur bleu moiré et de couleur ultraviolette sur la partie finale, environ 3°C, de la gamme d'activation thermique.

11. Dispositif d'affichage visuel selon la revendication 10, caractérisé en ce que le dispositif de filtre (7; 11) est réglé de manière à filtrer la couleur bleu moiré/ultraviolette de manière à ce que la couleur affichée par chaque couche ne soit visible que sur la partie initiale de la gamme d'activation thermique.

12. Dispositif d'affichage visuel selon la revendication 10, caractérisé en ce que le dispositif de filtre (7; 11) est réglé de manière à ce que seule une couleur spécifique soit visible dans la partie initiale de la gamme d'activation thermique.
